# EUROPÄISCHE PATENTSCHRIFT

(11) **EP 2 957 685 B1**
(45) Veröffentlichungstag und Bekanntmachung des Hinweises auf die Patenterteilung: **25.01.2017**
(21) Anmeldenummer: 15001770.5
(22) Anmeldetag: 16.06.2015
(51) Int. Cl.: E04B 1/61, F16B 5/00, E04B 2/74, F16B 12/46

(54) **VERBINDUNG ZWISCHEN WANDELEMENTEN**
CONNECTION BETWEEN WALL ELEMENTS
LIAISON ENTRE ELEMENTS DE MURS

(30) Priorität: 16.06.2014 AT 4782014
(43) Veröffentlichungstag der Anmeldung: 23.12.2015
(73) Patentinhaber: SIHGA GmbH, 4694 Ohlsdorf (AT)
(72) Erfinder: KOCH, Stefan, 8530 Deutschlandsberg (AT); GSTETTNER, Michael, 8047 Graz (AT)

(56) Entgegenhaltungen:
- WO-A1-2009/000003
- AT-B- 86 578
- JP-A- 2004 116 107
- US-A- 3 874 804
- US-A1- 2004 253 051

## Beschreibung

Die Erfindung betrifft eine Verbindung zwischen Wandelementen von in Fertigteilbauweise hergestellten Gebäuden.

"In Fertigteilbauweise hergestellte Gebäude" sind im Sinne dieses Dokumentes Gebäude, bei denen flächige Wandelemente ohne Verbindung mit anderen Wandelementen vorgefertigt werden und dann in einem Stück an der Baustelle passend platziert und mit benachbarten Wandelementen verbunden werden.

Es gibt eine Fülle von Vorschlägen dazu, ein zweites Wandelement bzw. damit vergleichbares Element mit einem benachbarten ersten Element zu verbinden, indem vom zweiten Element aus Teile schräg nach unten weg vorspringen und jeweils ein korrespondierender Teil des ersten Elementes von unten her in die nach unten hin offene Nut bzw. Bucht zwischen dem zweiten Element und den von diesem schräg nach unten weg vorspringenden Teilen ragt. Auf diese Art werden Verhakungen zwischen den beiden Elementen gebildet, wobei die Haken am ersten Element nach oben offen sind und die Haken am zweiten Element nach unten offen sind. Für das Herstellen der Verbindung wird erst das erste Element in die passende Position am Untergrund abgestellt und dann das zweite Element von schräg oben daran herangeführt, sodass die Verhakungen ineinander greifen. Zufolge Schwerkraft bleiben die Elemente aneinander fixiert. Durch Dimensionierung und Ausrichtung der Verhakungen ist erreichbar, dass die Elemente in eine genau definierte Relativposition aneinander gezogen werden und aneinander fixiert bleiben. Am Beispiel von Wandelementen von Fertigteilhäusern sind die verhakenden Teile der Wandelemente schon in der Fabrik vormontiert. Die Wandelemente können dann an der Baustelle recht schnell aneinander fixiert werden. An Literaturbeispielen seien dazu genannt: Gemäß der CH 249576 A sind zwei Holzprofile, welche zwischen benachbarten Wandelementen angeordnet sind, und Vorsprünge an den Stirnflächen der Wandelemente zwischen sich einklemmen, durch die oben beschriebene Verhakung aneinander gezogen. Die Verhakung zieht dabei die beiden Holzprofile in der zur Wandebene normal liegenden Richtung horizontal aneinander zu. An der Verhakung liegen zwei Metallteile, die mit jeweils einem der Holzprofile durch Schrauben verbunden sind, aneinander an.

DE 1980373 U zeigt eine Verhakung der beschriebenen Art durch welche Wandelemente in der gemeinsamen Wandebene in horizontaler Richtung aneinander gezogen werden. Die verhakten Teile sind einerseits von einem metallischen Randprofil des zweiten Wandelements freigestanzte und aufgebogene Zungen, anderseits die jeweils unteren Randbereiche von Durchbrüchen an einem metallischen Randprofil des ersten Wandelementes. Sehr ähnliche Vorschläge zeigen die DE 3820684 A1, die US 3087586 A und auch die WO 9533898 A1.

Gemäß der EP 1718812 B1 ist die Verhakung durch Paare von zueinander komplementär gestalteten Blechbiegeteilen gebildet, wobei die Teile des Paares an unterschiedlichen, einander zugewandten, genuteten Stirnseiten von unterschiedlichen Wandelementen festgeschraubt sind. Die zueinander komplementären Blechbiegeteile haben jeweils mehrere Paare von jeweils zueinander gleich ausgerichteten Berührungsflächen, an denen die Blechbiegeteile miteinander verhaken. Dabei sind die verschiedenen Paare von Berührungsflächen nicht zueinander parallel ausgerichtet. Damit wird erreicht, dass die Wandelemente in der horizontalen Ebene sowohl parallel zu der zu bildenden gemeinsamen Wandfläche als auch normal dazu in die passende Relativposition zueinander geführt werden.

Die der Erfindung zu Grunde liegende Aufgabe besteht darin, eine neuartige Verbindung für Wandelemente von Fertigteilhäusern zu schaffen, durch welche an einem ersten, schon aufgestellten Wandelement, ein zweites Wandelement fixierbar ist, indem das zweite Wandelement in gegenüber dem ersten Wandelement angehobenem Zustand an das erste Wandelement herangeführt wird, sodass die beiden Wandelemente einander an den beiden bestimmungsgemäßen Berührungsflächen berühren und dann das zweite Wandelement auf die gleiche Höhe wie das erste Wandelement abgesenkt wird.

Gegenüber den aus dem besprochenen Stand der Technik dazu schon bekannten Lösungen soll die neue Verbindung dahingehend besser sein, dass -
- die Wandelemente bei der Montage nicht so genau geführt werden müssen
- die Verbindung weniger empfindlich ist gegen Fertigungstoleranzen, insbesondere gegen Abweichungen von Abmessungen einzelner Teile gegenüber den theoretischen Idealmaßen.

Dokument WO2009/000003 offenbart eine Verbindung mit den Merkmalen des Oberbegriffs des Anspruchs 1.

Das erfindungsgemäße Lösen der Aufgabe wird durch eine Verbindung gemäß Anspruch 1 erreicht. Die Verbindung weist die Kombination der folgenden Merkmale auf :
a) An den beiden zu verbindenden Wandelementen ist jeweils an jener Fläche, welche dem jeweils anderen Wandelement zugewandt liegt, jeweils ein - des Weiteren als "Verbindungsprofil" bezeichnetes - Profil fix verankert.
b) Die beiden Verbindungsprofile liegen mit jeweils einem - des Weiteren als "Klemmfläche" bezeichneten - Oberflächenbereich an einer Klemmfläche des anderen Verbindungsprofils an, wobei jede Klemmfläche mit jener Fläche des Wandelementes, welches mit dem Verbindungsprofil verbunden ist, einen spitzen Winkel einschließt.
c) Zumindest eines der beiden Verbindungsprofile weist eine Nut auf, in welche eine Profilwand des anderen Verbindungsprofils hineinragt.
d) Bei dem eine Nut aufweisenden Verbindungsprofil befindet sich eine Klemmfläche an der der Nut zugewandten Seite einer die Nut seitlich begrenzenden Profilwand.
e) Die Breite der Nut an dem einen Verbindungsprofil ist größer als die Breite der in diese Nut ragenden Profilwand des anderen Verbindungsprofils. Der verbleibende Breitenbereich wird durch Klötze überbrückt, welche jeweils mit einem der beiden Verbindungsprofile fix verbunden sind.
f) Ein Klotz weist eine Schrägfläche auf, welche am Klotz von jener Fläche des Verbindungsprofils, mit welcher der Klotz verbunden ist abgewandt liegt, und mit der Profilrichtung des Verbindungsprofils einen spitzen Winkel einschließt.

Die Erfindung wird an Hand von etwas stilisierten Zeichnungen zu beispielhaften Ausführungsformen veranschaulicht:
- Fig. 1:: zeigt eine horizontale Schnittansicht durch den Verbindungsbereich von zwei Wandelementen, welche erfindungsgemäß an zwei einander zugewandten vertikalen Stirnflächen miteinander verbunden sind. Teile, welche in die gleiche Richtung schraffiert dargestellt sind fix miteinander verbunden.
- Fig. 2:: zeigt eine vertikale Schnittansicht der beiden Wandelemente von Fig. 1 während des Zusammenfügens, wobei die Schnittebene jene ist, die in Fig. 1 angedeutet ist.
- Fig. 3:: zeigt in Ansicht von oben ein weiteres Beispiel für einen Verbindungsbereich von zwei Wandelementen, welche erfindungsgemäß an zwei einander zugewandten vertikalen Stirnflächen miteinander verbunden sind.
- Fig. 4:: zeigt eine vertikale Schnittansicht der beiden Wandelemente von Fig. 3 während des Zusammenfügens, wobei die Schnittebene jene ist, die in Fig. 3 angedeutet ist. Teile, welche in die gleiche Richtung schraffiert dargestellt sind fix miteinander verbunden.
- Fig. 5:: zeigt in Ansicht von oben ein drittes Beispiel für einen Verbindungsbereich von zwei Wandelementen, welche erfindungsgemäß an zwei einander zugewandten vertikalen Stirnflächen miteinander verbunden sind.
- Fig. 6:: zeigt die Wandelemente von Fig. 5 getrennt in einer perspektivischen Ansicht. Das oben dargestellte Wandelement 2 ist für das erfindungsgemäße Verbinden mit dem unten dargestellten Wandelement 1 wie durch den punktiert eingezeichneten gekrümmten Pfeil angedeutet, um 180° zu schwenken.
- Fig. 7:: zeigt in vertikaler Schnittansicht durch erfindungsgemäße verbundene Wandelemente ein optional anwendbares Erfindungsdetail. Teile, welche in die gleiche Richtung schraffiert dargestellt sind fix miteinander verbunden.

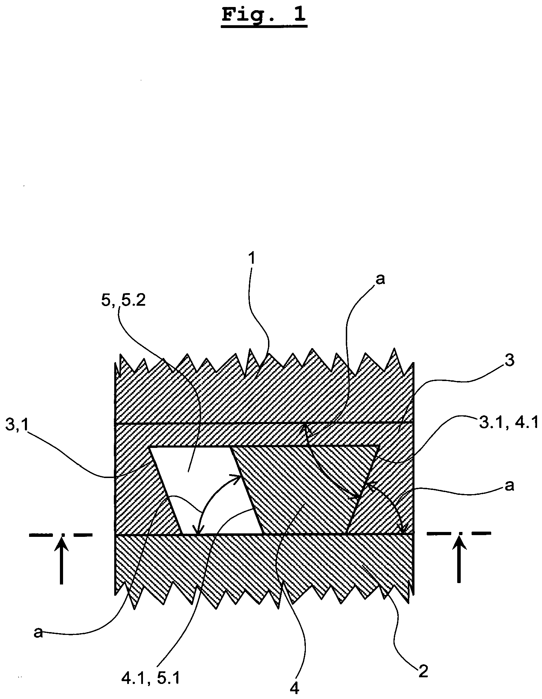

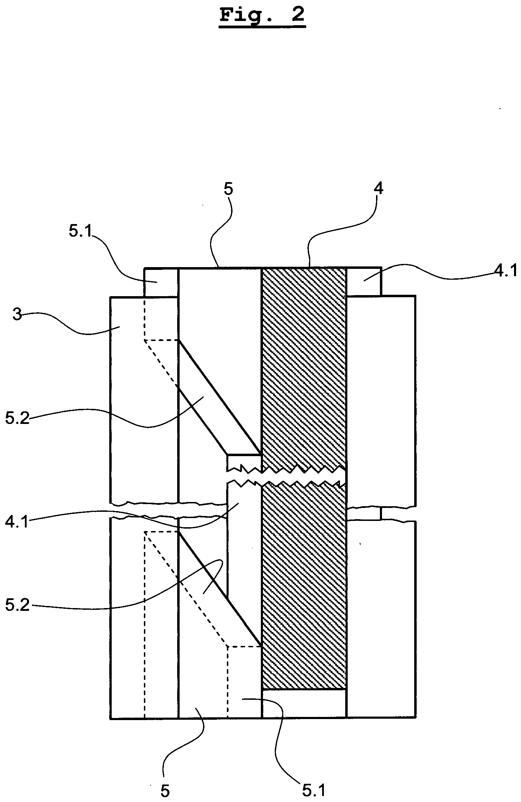

Im Beispiel gemäß Fig. 1 und Fig. 2 ist das Wandelement 1 an seiner vertikalen, dem Wandelement 2 zugewandten Stirnfläche mit einem entlang dieser Stirnfläche verlaufenden Verbindungsprofil 3 versehen. Das Wandelement 2 ist an seiner vertikalen, dem Wandelement 1 zugewandten Stirnfläche mit einem entlang dieser Stirnfläche verlaufenden Verbindungsprofil 4 versehen. Die Wandelemente können beispielsweise aus miteinander verleimten Holzbohlen bestehen. Die Verbindungsprofile 3, 4 sind typischerweise Holzprofile. Die Verbindung zwischen Wandelement 1, 2 und jeweiligem Verbindungsprofil 3 4 ist starr und idealerweise schon fabrikseitig vorgefertigt. Typischerweise ist diese starre Verbindung durch Verkleben und zusätzliche Schrauben gebildet.

Das mit dem Wandelement 1 starr verbundene Verbindungsprofil 3 weist eine zum Wandelement 2 hin offene Profilnut auf. Das zum Verbindungsprofil 3 parallel ausgerichtete Verbindungsprofil 4 ragt vom Wandelement 2 her in die Profilnut am Verbindungsprofil 3 hinein und ist an drei Seiten von der Profilnut umfasst. In der zur Ebene der Wandelemente 1, 2 normalen Richtung ist das Verbindungsprofil 4 schmäler als die Nut am Verbindungsprofil 3 und auch schmäler als die Öffnungsbreite dieser Profilnut. Das "umfasste" Verbindungsprofil 4 liegt mit zwei Mantelflächenseiten an Begrenzungsflächen der Nut im "umfassenden" Verbindungsprofil 3 an. Die vom Wandelement 2 abgewandt liegende Mantelflächenseite des Verbindungsprofils 4 liegt an der Grundfläche der Nut im Verbindungsprofil 3 an.

Eine des Weiteren als "Klemmfläche 4.1" bezeichnete seitliche Fläche des Verbindungsprofils 4, liegt an einer des Weiteren als "Klemmfläche 3.1" bezeichneten Fläche des Verbindungsprofils 3 an, welche die Innenseite einer, die Nut am Verbindungsprofil 3 begrenzenden, seitlichen Profilwand ist. Die Klemmflächen 3.1, 4.1 sind zueinander parallel angeordnet und liegen aneinander an. Von wesentlicher Bedeutung ist, dass die Klemmflächen 3.1 bzw. 4.1 mit der ihnen zugewandten Fläche des zu ihnen gehörenden Wandelements 1 bzw. 2 jeweils einen spitzen Winkel a einschließen. Jeweils an den Enden der Verbindungsprofile 3, 4 ist ein Klotz 5 neben dem Verbindungsprofil 4 in der Nut im Verbindungsprofil 3 angeordnet, welcher die Differenz der Breite der Nut zu der Breite des Verbindungsprofils 4 genau überbrückt. Da die Klötze 5 an der von den Klemmflächen 3.1, 4.1 abgewandten Seite des Verbindungsprofils 4 in der Nut im Verbindungsprofil 3 angeordnet sind, erzwingen sie, dass die Klemmflächen 3.1, 4.1 aneinander anliegen. Die Klötze 5 bestehen typischerweise auch aus Holz; idealerweise ist ihre Breite so bemessen, dass sie in der Nut zwischen den beiden Verbindungsprofilen im elastischen Bereich etwas zusammengepresst werden und somit durch elastische Vorspannung eine Kraft auf das Verbindungsprofil 4 bewirkten, durch welche dieses in der zu den Profilrichtungen normalen Ebene mit seiner Klemmfläche 4.1 an die Klemmfläche 3.1 des Verbindungsprofils 3 angepresst wird.

Indem die Klemmfläche 3.1 des Verbindungsprofils 3 mit der dem Verbindungsprofil 3 zugewandten Fläche des mit dem Verbindungsprofil 3 verbundenen Wandelementes 1, den spitzen Winkel a einschließt und indem die Klemmfläche 4.1 des Verbindungsprofils 4 mit der dem Verbindungsprofil 4 zugewandten Fläche des mit dem Verbindungsprofil 4 verbundenen Wandelementes 2 den spitzen Winkel a einschließt, werden durch das Aneinanderpressen der beiden Klemmflächen 3.1, 4.1 die beiden Wandelemente 1, 2 gegeneinander gezogen, bis das Verbindungsprofil 4 an der Grundfläche der Nut im Verbindungsprofil 3 anliegt und/oder bis die dem Wandelement 2 zugewandten Flächen des Verbindungsprofils 3 an dem Wandelement 2 anliegen. Damit ergibt sich eine klar definierte, gut fixierte Lage der beiden Wandelemente 1, 2 zueinander.

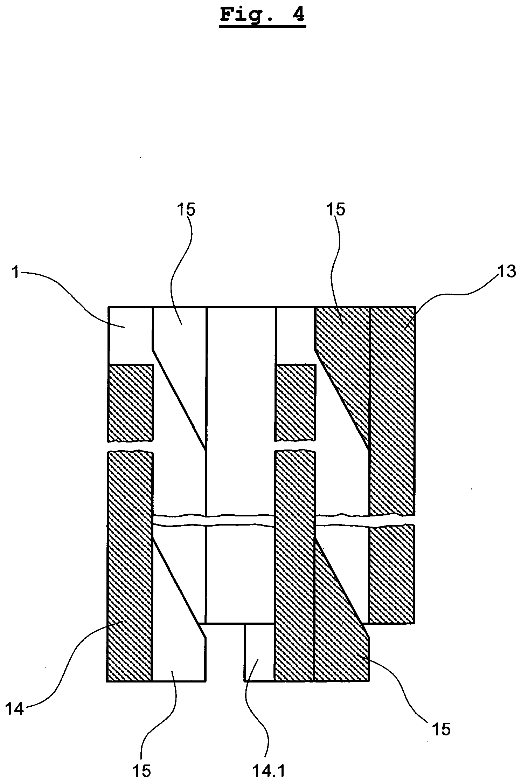

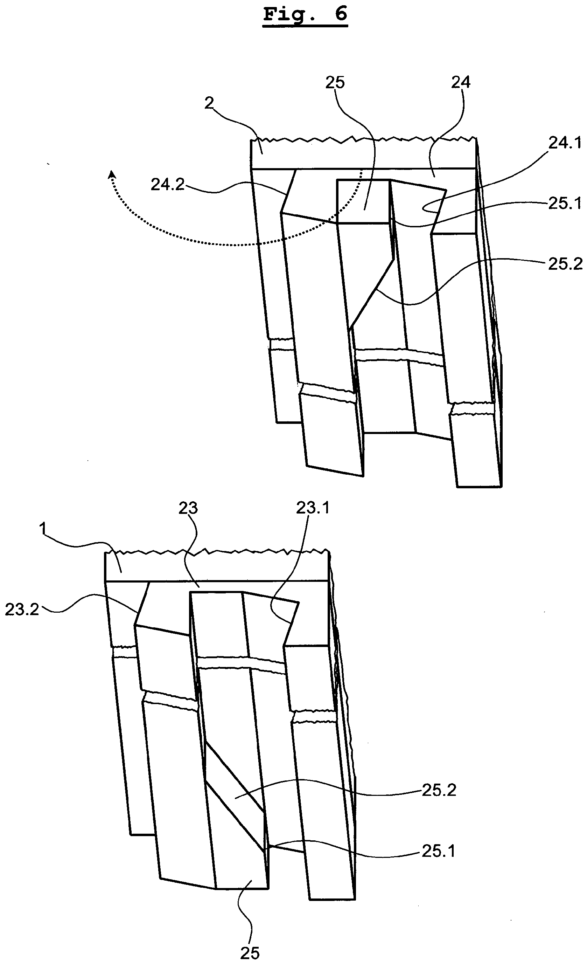

Die genauere Anordnung der Klötze 5 und der Montagevorgang von zwei Wandelementen 1, 2 aneinander wird an Hand von Fig. 2 (und des Weiteren an Hand von Fig. 4 und Fig. 6) anschaulich.

Das Wandelement 1, welches das Verbindungsprofil 3 aufweist wird auf der Baustelle als erstes der beiden Wandelemente 1, 2 passend aufgestellt. Am unteren Ende der Nut im Verbindungsprofil 3 ist ein Klotz 5 fixiert, typischerweise indem er mit versenkten Schrauben am Verbindungsprofil 3 festgeschraubt ist. Dieser untere Klotz 5 weist eine Klemmfläche 5.1 auf, mit welcher er bestimmungsgemäß nach Vollendung der Montage am Verbindungsprofil 4 anliegt und gegen dieses andrückt. Weiters weist der untere Klotz 5 eine Schrägfläche 5.2 auf, welche derart ausgerichtet ist, dass auf ihr mit sinkender Höhenkoordinate eine horizontale Verschiebung verbunden ist, die von der vom Verbindungsprofil 4 beabstandet liegenden seitlichen Begrenzung der Nut im Verbindungsprofil 3 zum Verbindungsprofil 4 verbunden ist. Beim unteren Klotz 5 ist diese Schrägfläche 5.2 eine steile Hangfläche.

Das Wandelement 2, welches das Verbindungsprofil 4 aufweist wird auf der Baustelle als zweites der beiden Wandelemente 1, 2 passend aufgestellt. Am oberen Ende der Nut im Verbindungsprofil 4 ist ein Klotz 5 fixiert, typischerweise indem er mit versenkten Schrauben am Verbindungsprofil 4 festgeschraubt ist. Dieser obere Klotz 5 weist eine Klemmfläche 5.1 auf, mit welcher er bestimmungsgemäß nach Vollendung der Montage am Verbindungsprofil 3 anliegt und gegen dieses andrückt. Weiters weist der obere Klotz 5 eine Schrägfläche 5.2 auf, welche derart ausgerichtet ist, dass auf ihr mit sinkender Höhenkoordinate eine horizontale Verschiebung verbunden ist, die von der vom Verbindungsprofil 4 beabstandet liegenden seitlichen Begrenzung der Nut im Verbindungsprofil 3 zum Verbindungsprofil 4 verbunden ist. Beim oberen Klotz 5 ist diese Schrägfläche 5.2 eine steile Überhangfläche.

Bei der typischen Montage des Wandelementes 2 am schon aufgestellten Wandelement 1 wird erst das Wandelement 2 in gegenüber dem Wandelement 1 angehobenem Zustand (mittels eines Krans) so an das Wandelement 1 herangehoben, dass der untere Längsbereich des Verbindungsprofils 4 durch den oberen Längsbereich des Verbindungsprofils 3 umfasst wird, der untere Klotz 5 aber noch zur Gänze unterhalb des Wandelements 2 liegt und der obere Klotz 5 noch zur Gänze oberhalb des Wandelements 1.

Dann wird das Wandelement 2 abgesenkt. Die Verbindungsprofile 4, 3 bewirken dabei eine lose Führung der Bewegung. Gegen Ende des Absenkens gelangt ein unterer Kantenbereich des Verbindungsprofils 4 an die Schrägfläche 5.2 des unteren Klotzes 5 und die Schrägfläche 5.2 des oberen Klotzes 5 gelangt an einen oberen Kantenbereich des Verbindungsprofil 3. An den Schrägflächen 5.2 gleiten Klötze 5 und Verbindungsprofil 3 bzw. 4 derart aneinander ab, dass das Verbindungsprofil 4 relativ zum Verbindungsprofil 3 in der zur Profilrichtung normal liegenden Ebene "automatisch" in die in Fig. 1 dargestellte, definierte Lage kommt. Schließlich kommen die Verbindungsprofile 3, 4 zu jenem Ende der Schrägflächen 5.2 der Klötze 5 bei denen jeweils die Schrägflächen 5.2 in die Klemmfläche 5.1 übergeht. Unter Reibung zwischen Klemmflächen 5.1 und Verbindungsprofil 4 bzw. Verbindungsprofil 3 gleitet das Wandelement 2 noch so weit nach unten, bis es mit seiner unteren Stirnfläche wie schon das Wandelement 1 am darunter liegenden Teil des Bauwerks anliegt. Da die Verbindung zwischen den Wandelementen 1, 2 bezüglich Drehung der Wandelemente um die vertikale Achse der Verbindung nicht sehr steif ist, sollte das Wandelement 2 um diese Achse in die richtige Position geschwenkt werden bevor es tatsächlich am Untergrund aufsetzt.

Es ist offensichtlich, dass diese Art der Montage sehr einfach und rasch erfolgen kann, ohne dass dazu großes handwerkliches Geschick oder aufwändige Apparaturen erforderlich sind.

Bei Bedarf (z.B. in Gebieten mit Erdbebengefahr) kann man die Wandelemente nach dem beschriebenen Aufstellen noch durch zusätzliche Verbindungselemente wie schräg von den oberen Stirnflächen her eingesetzte Schrauben, zusätzlich miteinander verbinden.

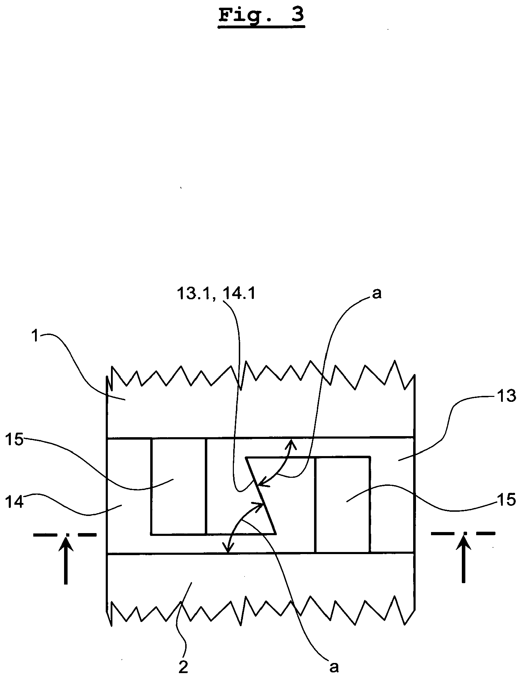

In der Ausführung gemäß Fig. 1 und Fig. 2 ist die erfindungsgemäße Bauweise beispielhaft erklärt. An der Bauweise gemäß Fig. 1 und Fig. 2 kann man bemängeln, dass zwei verschiedene Verbindungsprofile 3, 4 verwendet werden müssen, was gegenüber dem Erfordernis von zueinander gleichen Verbindungsprofilen einen logistischen Aufwand bedeuten kann. Bei den Bauweisen gemäß den Zeichnungen Fig. 3 bis. Fig. 6 ist dieser (eventuelle) Nachteil behoben.

Bei den Bauweisen gemäß Fig. 3 bis Fig. 6 sind die beiden miteinander zu koppelnden Verbindungsprofile 13, 14 bzw. 23, 24 zueinander genau gleich. Sie sind nur in Einbaulage um eine profilparallel Achse zueinander um 180° geschwenkt und etwas seitlich (normal zur Ebene der zu verbindenden Wandelemente) gegeneinander verschoben. Die Verbindungsprofile 13, 14 bzw. 23, 24 weisen jeweils eine Nut und zwei seitliche Begrenzungswände der Nut auf. Bei fertig hergestellter Verbindung ragt jeweils eine seitliche Begrenzungswand des einen Verbindungsprofils in die Nut des jeweils anderen Verbindungsprofils hinein.

Am Beispiel gemäß Fig. 3 und Fig. 4 ist das Wandelement 1 mit dem Verbindungsprofil 13 versehen und das Wandelement 2 mit dem Verbindungsprofil 14. Die erfindungsgemäß wesentlichen Klemmflächen 13.1, 14.1 - deren Funktionsweise gleich ist wie bei den Klemmflächen 3.1, 4.1 - liegen jeweils an der Innenseite jener seitlichen Nutbegrenzungswand des Verbindungsprofils 13, 14, welche in die Nut am jeweils anderen Verbindungsprofil ragt. Jener Breitenbereich der beiden Nuten, welcher nicht durch die in die jeweilige Nut ragende Profilwand des jeweils anderen Verbindungsprofils abgedeckt wird, wird wiederum durch untere und obere Klötze 15 (Fig. 4), welche in Funktion, Aufbau und Anordnung gleich sind wie die Klötze 5 gemäß Fig. 1 und Fig. 2, abgedeckt. Die Klötze 5 erstrecken sich jeweils zwischen jener Profilwand eines Verbindungsprofils 13, 14, welches durch die Nut am anderen Verbindungsprofil 14, 13 umfasst ist auf der einen Seite und jener Profilwand am anderen Verbindungsprofil 14, 13, welches vom ersten Verbindungsprofil abgewandt liegt auf der anderen Seite. Dieser Aufbau bedingt, dass je Wandverbindung zwei Paare von Klötzen 15 erforderliche sind, welche jeweils einen oberen und einen unteren Klotz 15 umfassen.

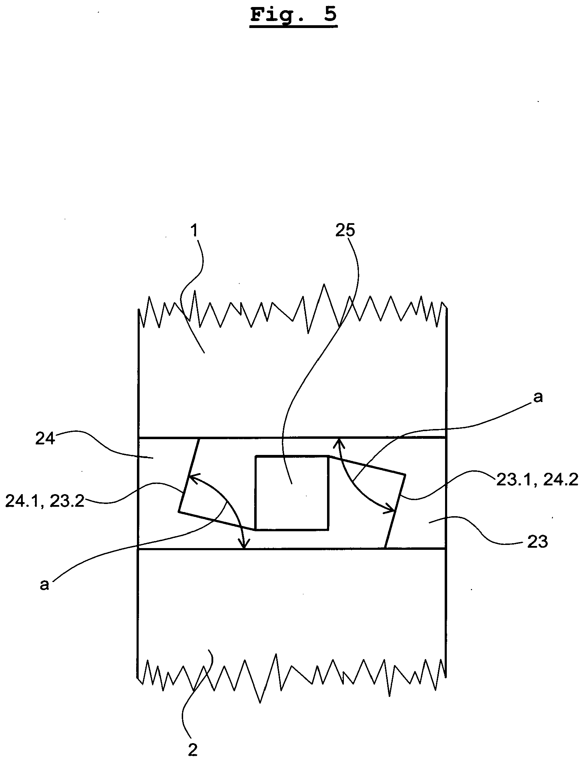

Am Beispiel gemäß Fig. 5 und Fig. 6 ist das Wandelement 1 mit dem Verbindungsprofil 23 versehen und das Wandelement 2 mit dem Verbindungsprofil 24. Die erfindungsgemäß wesentlichen Klemmflächen 23.1, 24.2 und 24.1, 23.2 - deren Funktionsweise gleich ist wie bei den Klemmflächen 3.1, 4.1 - liegen nun einerseits jeweils an der Außenseite jener seitlichen Nutbegrenzungswand des Verbindungsprofils, welche in die Nut am jeweils anderen Verbindungsprofil ragt, andererseits jeweils an der Innenseite jener Profilwand eines Verbindungsprofils, welche nicht in die Nut am anderen Verbindungsprofil ragt. Damit ergeben sich zwei Paare von aneinander anliegenden Klemmflächen 23.1,24.2, bzw. 24.1, 23.2, welche seitlich (normal zur Ebene der Wandflächen) gegeneinander versetzt sind. Jener Breitenbereich der beiden Nuten, welcher nicht durch die in die jeweilige Nut ragende Profilwand des jeweils anderen Verbindungsprofils abgedeckt wird, wird wiederum durch einen oberen und einen unteren Klotz 25 (Fig. 6), welche in Funktion, Aufbau und Anordnung gleich sind wie die Klötze 5 gemäß Fig. 1 und Fig. 2, abgedeckt. Die Klötze 25 erstrecken sich jeweils zwischen jenen beiden Profilwänden der beiden Verbindungsprofile 23, 24, die durch die Nut am jeweils anderen Verbindungsprofil umfasst sind. Dieser Aufbau bedingt, dass man je Wandverbindung mit einem Paar von Klötzen 25 auskommt, welches bezüglich der Wandelemente 1, 2 genau in deren wandparallelen Symmetrieebene liegt.

Von den drei gezeigten Versionen dürft die Version gemäß Fig. 5 und Fig. 6 bezüglich Herstellungsaufwand und statischer Festigkeit die am meisten Vorteilhafte sein.

In den Zeichnungen Fig. 1 bis. Fig. 6 wurden jeweils Klötze 5, 15, 25 vorgestellt, welche jeweils für sich allein den zu überbrückenden Spalt zwischen zwei Verbindungsprofilen überbrücken. Das bedingt, dass diese Klötze 5, 15, 25 nur jeweils am oberen bzw. unteren Ende eines Verbindungsprofils angeordnet werden können, wenn sie nicht die Montage erschweren bis unmöglich machen sollen. Das bedingt allerdings, dass die Verbindung zwischen Wandelementen 1, 2 in mittlerer Höhe nicht gut fixiert ist und dass sich (im Lauf der Zeit) dort Spalte ergeben können.

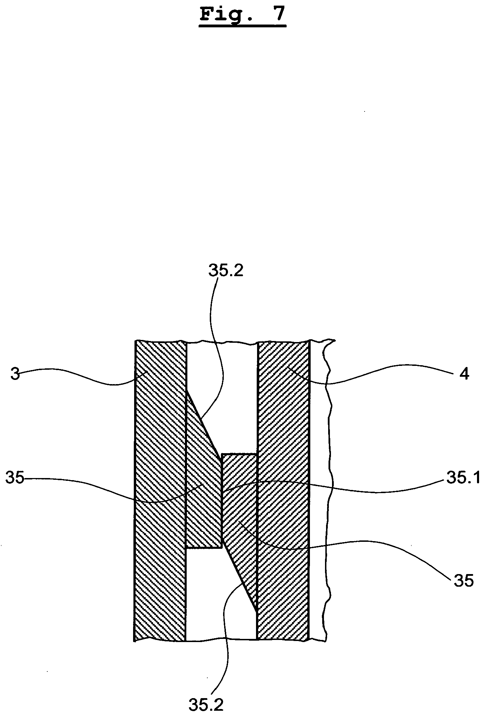

In Fig. 7 ist eine Bauweise und Anordnungsweise für Klötze 35 skizziert durch welche dieser Nachteil behebbar ist. Es wird jeweils ein Paar von Klötzen 35 verwendet, welche bei fertig montierten Wandelementen in gleicher Höhe und nebeneinander aneinander anliegend angeordnet sind und gemeinsam den zu überbrückenden Spalt zwischen zwei Verbindungsprofilen 3, 4 überbrücken.

In dem in Fig. 7 skizzierten Beispiel gehört das Verbindungsprofil 3 zu jenem Wandelement, welches als erstes aufgestellt wird. Der mit dem Verbindungsprofil 3 verbundene Klotz 35 hat seine Schrägfläche hangartig an der Oberseite. Das Verbindungsprofil 4 gehört zu jenem Wandelement, welches als zweites aufgestellt wird und beim Aufstellen entlang des zuvor abgestellten Wandelementes abgesenkt wird. Der mit dem Verbindungsprofil 4 verbundene Klotz 35 hat seine Schrägfläche überhangartig an der Unterseite. Beim Absenken des zweiten Wandelementes gleiten die Klötze 35 an den beiden Schrägflächen 35.2 aneinander ab und kommen schließlich an den Klemmflächen 35.1 zum Anliegen.

An zwei zu verbindenden Wandelementen können mehrere Paare von Klötzen 35 in vertikalem Abstand zueinander vorgesehen sein, wobei diese Paare auch von den oberen und unteren Enden der Verbindungsprofile entfernt angeordnet sein können. Vor allem aus optischen Gründen ist es vorteilhaft an den oberen und unteren Enden der Verbindungsprofile dennoch einteilige Klötze 5, 15, 25 wie weiter oben beschrieben zu verwenden.

Bei der erfindungsgemäßen Verbindung liegen die Wandelemente jedenfalls immer am Untergrund auf, da benachbarte Wandelemente mit Ausnahme gegen Relativbewegung zueinander in vertikaler Richtung nicht formschlüssig gehalten werden können. Gegen seitliche Relativbewegung zueinander sind die Wandelemente durch Verbindungsprofile und Klötze aus Holz gehalten. Da Holz einen relativ niedrigen Elastizitätsmodul aufweist (insbesondere quer zur Faserrichtung) können Verbindungsprofile und Klötze bei hergestellter Verbindung gut unter elastischer Vorspannung in Presspassung aneinander anliegen. Damit ergibt sich ein sehr guter Ausgleich von allfälligen Fertigungstoleranzen durch elastische Verformung der Verbindungsteile. Durch die weiter oben schon beschriebene Ausführung der Klemmflächen und dadurch, dass die Nut in einem Verbindungsprofil, in welche eine Wand des anderen Verbindungsprofils eingebracht werden muss, sehr deutlich breiter sein kann, als die eingebrachte Wand, ist auch das Zusammenfügen von Wandelementen möglich, ohne dass es schwierig zu führender genauer Relativbewegungen der Wandelemente zueinander bedarf. (Die erforderlichen genauen Relativbewegungen der Wandelemente zueinander werden durch die Art der Verbindung automatisch passend geführt.) Überdies bewirkt die erfindungsgemäße Verbindung keine störenden Kältebrücken zwischen den beiden Wandseiten.

Ergänzend sei noch zu erwähnen, dass durch die erfindungsgemäße Verbindung nicht nur Stirnseite-Stirnseite-Verbindungen zwischen Wandelementen möglich sind, sondern auch L- und T-Verbindungen.

Es kommt nur darauf an, an welchem Flächenbereich eines Wandelementes man ein Verbindungsprofil vorsieht.

## Patentansprüche

1. Verbindung zwischen Wandelementen (1, 2) von Gebäuden wobei an den beiden zu verbindenden Wandelementen (1, 2) jeweils an jener Fläche, welche dem jeweils anderen Wandelement (2, 1) zugewandt liegt, jeweils ein Verbindungsprofil (3, 4, 13, 14, 23, 24) fix verankert ist,
- das erste Verbindungsprofil (3, 13, 23) mit jeweils einer Klemmfläche (3.1, 13.1, 23.1, 23.2) an einer dazu parallelen Klemmfläche (4.1, 14.1, 24.2, 24.1) des zweiten Verbindungsprofils (4, 14, 24) anliegt,
- wobei jede Klemmfläche (3.1, 13.1, 23.1, 4.1, 14.1, 24.1) mit jener Fläche des Wandelementes (1, 2) welches mit dem Verbindungsprofil (3, 13, 23, 4, 14, 24) verbunden ist, einen spitzen Winkel (a) einschließt,
- wobei zumindest eines der beiden Verbindungsprofile (3, 4, 13, 14, 23, 24) eine Nut aufweist, in welche eine Profilwand des jeweils anderen Verbindungsprofils hineinragt,
- wobei sich bei dem die Nut aufweisenden Verbindungsprofil (3, 13, 14, 23, 24) die Klemmfläche (3.1, 13.1, 14.1, 23.1, 24.1) an der der Nut zugewandten Seite einer die Nut seitlich begrenzenden Profilwand befindet,
- wobei die Breite der Nut an dem einen Verbindungsprofil (3, 13, 14, 23, 24) größer ist als die Breite der in diese Nut ragenden Profilwand des anderen Verbindungsprofils (4, 13, 14, 23, 24),
- **dadurch gekennzeichnet, dass** der verbleibende Breitenbereich der Nut durch Klötze (5, 15, 25, 35) überbrückt wird, welche jeweils mit einem der beiden Verbindungsprofile (3, 4, 13, 14, 23, 24) fix verbunden sind.

2. Verbindung nach Anspruch 1, **dadurch gekennzeichnet, dass** der Klotz (5, 15, 25, 35) eine Schrägfläche (5.2, 15.2, 25.2, 35.2) aufweist, welche am Klotz von jener Fläche des Verbindungsprofils (3, 4, 13, 14, 23, 24), mit welcher der Klotz (5, 15, 25, 35) verbunden ist, abgewandt liegt, und mit der Profilrichtung des Verbindungsprofils einen spitzen Winkel einschließt.

3. Verbindung nach Anspruch 1 oder 2, **dadurch gekennzeichnet, dass** das Verbindungsprofil (3) ein U-Profil ist und dass seine Nut das Verbindungsprofil (4) an drei Seiten umschließt.

4. Verbindung nach Anspruch 1 oder Anspruch 2, **dadurch gekennzeichnet, dass** beide Verbindungsprofile (13, 14; 23, 24) jeweils eine Nut aufweisen und dass von jedem Verbindungsprofil (13, 14, 23, 24) aus jeweils eine, die Nut an diesem Verbindungsprofil (13, 14, 23, 24) seitlich begrenzende, Profilwand in die Nut des jeweils anderen Verbindungsprofils hinein ragt.

5. Verbindung nach Anspruch 4, **dadurch gekennzeichnet, dass** die Paare von miteinander zusammenwirkenden Verbindungsprofilen (13, 14; 23, 24) aus zwei gleichen Profilen bestehen, welche in Einbaulage relativ zueinander aus der gleichen Lage heraus um 180° um eine profilparallele Achse geschwenkt und quer zur Profilrichtung verschoben sind.

6. Verbindung nach Anspruch 4 oder 5, **dadurch gekennzeichnet, dass** die aneinander anliegenden Klemmflächen (13.1, 14.1) jeweils an der Innenseite jener seitlichen Nutbegrenzungswand des Verbindungsprofils (13, 14) liegen, welche in die Nut am jeweils anderen Verbindungsprofil (14, 13) ragt.

7. Verbindung nach Anspruch 4 oder 5, **dadurch gekennzeichnet, dass** die Klemmfläche (23.1, 24.1) des Verbindungsprofils (23, 24) an der Innenseite jener seitlichen Nutbegrenzungswand des Verbindungsprofils (23, 24) liegt, welche nicht in die Nut am jeweils anderen Verbindungsprofil (24, 23) ragt und dass die an dieser Klemmfläche anliegenden Klemmfläche (24.2, 23.2) des jeweils anderen Verbindungsprofils (24, 23) an der Außenseite jener seitlichen Nutbegrenzungswand des Verbindungsprofils (24, 23) liegt, welche in die Nut am jeweils anderen Verbindungsprofil (23, 24) ragt.

8. Verbindungsprofil nach einem der Ansprüche 1 bis 7, **dadurch gekennzeichnet, dass** zwei der Klötze (35) in gleicher Höhe nebeneinander, aneinander anliegen und gemeinsam, den zu überbrückenden Spalt zwischen zwei Verbindungsprofilen (3, 4) überbrücken.

## Claims

1. Connection between wall elements (1, 2) of buildings whereby, on both of the wall elements (1, 2) which are to be connected, in each case on that particular surface which faces the corresponding other wall element (2, 1), a connecting profile (3, 4, 13 14, 23, 24) is firmly anchored,
- whereby the first connecting profile (3, 13, 23) is attached, in each case by means of a clamping surface (3.1, 13.1, 23.1, 23.2), to a parallel clamping surface (4.1, 14.1, 24.2, 24.1) of the second connecting profile (4, 14, 24),
- whereby each clamping surface (3.1, 13.1, 23.1, 4.1, 14.1, 24.1) forms an acute angle (a) with that particular surface of the wall element (1, 2) which is connected to the connecting profile (3, 13, 23, 4, 14, 24),
- whereby at least one of the two connecting profiles (3, 4, 13, 14, 23, 24) has a groove into which projects a profile wall of the other connecting profile in each case,
- whereby, in the case of the connecting profile which exhibits the groove (3, 13, 14, 23, 24), the clamping surface (3.1, 13.1, 14.1, 23.1, 24.1) is located on the groove-facing side of a profile wall which laterally limits the groove,
- whereby the width of the groove on the one connecting profile (3, 13, 14, 23, 24) is greater than the width of the profile wall of the other connecting profile (4, 13, 14, 23, 24) which projects into this groove,
- which is **characterised by** the fact that
the remaining width area of the groove is bridged by blocks (35 5, 15, 25,), each of which is firmly connected to one of the two connecting profiles (3, 4, 13, 14, 23, 24).

2. Connection according to claim 1, **characterised by** the fact that the block (5, 15, 25, 35) exhibits an inclined surface (5.2, 15.2, 25.2, 35.2) which lies averted on the block from that surface of the connecting profile (3, 4, 13, 14, 23, 24) with which the block (5, 15, 25, 35) is connected and encloses an acute angle with the profile direction of the connecting profile.

3. Connection according to claim 1 or 2, **characterised by** the fact that the connecting profile (3) is a U-profile and that its groove encloses the connecting profile (4) on three sides.

4. Connection according to claim 1 or 2, **characterised by** the fact that both connecting profiles (13, 14; 23, 24) exhibit one groove each and that from each connecting profile (13, 14, 23, 24) a profile wall, laterally limiting the groove on this connecting profile (13, 14, 23, 24), projects into the groove of the other connecting profile.

5. Connection according to claim 4, **characterised by** the fact that the pairs of interacting connecting profiles (13, 14; 23, 24) consist of two identical profiles, each of which is pivoted by 180° in the installed position relative to each other around a profile-parallel axis and shifted transversely in relation to the profile direction.

6. Connection according to claim 4 or 5, **characterised by** the fact that the abutting clamping surfaces (13.1, 14.1) lie in each case on the inner side of the particular lateral groove-limiting wall of the connecting profile (13, 14), which in each case projects into the groove on the other connecting profile (14, 13).

7. Connection according to claim 4 or 5, **characterised by** the fact that the clamping surface (23.1, 24.1) of the connecting profile (23, 24) lies in each case on the inner side of the particular lateral groove-limiting wall of the connecting profile (24, 23), which in each case does not protrude into the groove on the other connecting profile (23, 24), and that the clamping surface abutting this clamping surface (24.2, 23.2) of the other connecting profile (24, 23) in each case lies on the outer side of each particular groove-limiting wall of the connecting profile (24, 23), which projects in each case into the groove on the other connecting profile (23, 24).

8. Connecting profile according to any one of claims 1 to 7, **characterised by** the fact that two of the blocks (35) lie at the same level next to one another, abut one another and together bridge the gap which is to be bridged between two connecting profiles (3, 4).

## Revendications

1. Raccord entre éléments de mur (1, 2) de bâtiments, dans lequel au niveau des deux éléments de mur (1, 2) à raccorder, il est ancré de manière fixe sur la surface orientée vers l'autre élément de mur (2, 1) un profil de raccordement (3, 4, 13, 14, 23, 24),
- le premier profil de raccordement (3, 13, 23) reposant, avec une surface de serrage (3.1, 13.1, 23.1, 23.2) sur une surface de serrage parallèle (4.1, 14.1, 24.2, 24.1) du deuxième profil de raccordement (4, 14, 24),
- chaque surface de serrage (3.1, 13.1, 23.1, 4.1, 14.1, 24.1) formant, avec la surface de l'élément de mur (1, 2) qui est raccordé au profil de raccordement (3, 13, 23, 4, 14, 24), un angle aigu (a),
- au moins un des deux profils de raccordement (3, 4, 13, 14, 23, 24) présentant une rainure dans laquelle une paroi profilée de l'autre profil de raccordement vient s'engager,
- dans lequel au niveau du profil de raccordement (3, 13, 14, 23, 24) présentant la rainure, la surface de serrage (3.1, 13.1, 14.1, 23.1, 24.1) se trouve sur le côté orienté vers la rainure d'une paroi profilée délimitant latéralement la rainure,
- la largeur de la rainure au niveau du profil de raccordement (3, 13, 14, 23, 24) étant supérieur à la largeur de la paroi profilée de l'autre profil de raccordement (4, 13, 14, 23, 24) venant s'engager dans cette rainure,
- **caractérisé en ce que**
la zone de largeur restante de la rainure est comblée par des cales (5, 15, 25, 35) qui sont raccordées fixement à l'un des deux profils de raccordement (3, 4, 13, 14, 23, 24).

2. Raccord selon la revendication 1, **caractérisé en ce que** la cale (5, 15, 25, 35) présente une surface oblique (5.2, 15.2, 25.2, 35.2), laquelle, au niveau de la cale, repose à l'opposé de la surface du profil de raccordement (3, 4, 13, 14, 23, 24), avec laquelle la cale (5, 15, 25, 35) est raccordée, et forme avec l'axe du profil de raccordement un angle aigu.

3. Raccord selon la revendication 1 ou 2, **caractérisé en ce que** le profil de raccordement (3) est un profil en U et **en ce que** sa rainure entoure le profil de raccordement (4) sur trois côtés.

4. Raccord selon la revendication 1 ou 2, **caractérisé en ce que** les deux profils de raccordement (13, 14; 23, 24) présentent chacun une rainure et **en ce qu'**il sort de chaque profil de raccordement (13, 14, 23, 24) une paroi profilée qui délimite latéralement la rainure au niveau de ce profil de raccordement (13, 14, 23, 24), laquelle paroi profilée vient s'engager dans la rainure de l'autre profil de raccordement.

5. Raccord selon la revendication 4, **caractérisé en ce que** les paires de profils de raccordement (13, 14; 23; 24) coopérant l'un avec l'autre sont composées de deux profils identiques, lesquels, en position montée, sont inclinés à 180° l'un par rapport à l'autre à partir d'une même position autour d'un axe parallèle du profil et sont déplacés transversalement au sens du profil.

6. Raccord selon la revendication 4 ou 5, **caractérisé en ce que** les surfaces de serrage (13.1, 14.1) juxtaposées reposent sur le côté intérieur de la paroi de délimitation de rainure latérale du profil de raccordement (13, 14), laquelle paroi vient s'engager dans la rainure au niveau de l'autre profil de raccordement (14, 13).

7. Raccord selon la revendication 4 ou 5, **caractérisé en ce que** la surface de serrage (23.1, 24.1) du profil de raccordement (23, 24) repose sur le côté intérieur de la paroi de délimitation de rainure latérale du profil de raccordement (23, 24) qui ne vient pas s'engager dans la rainure de l'autre profil de raccordement (24, 23), et **en ce que** la surface de serrage (24.2, 23.2) adjacente à cette surface de serrage de l'autre profil de raccordement (24, 23) repose sur le côté extérieur de la paroi de délimitation de rainure latérale du profil de raccordement (24, 23) qui vient s'engager dans la rainure au niveau de l'autre profil de raccordement (23, 24).

8. Profil de raccordement selon l'une des revendications 1 à 7, **caractérisé en ce que** deux des cales (35) reposent l'une à côté de l'autre à la même hauteur et surmontent ensemble l'interstice à surmonter entre les deux profils de raccordement (3, 4).
